# EUROPEAN PATENT SPECIFICATION

(11) **EP 1 608 226 B1**
(45) Date of publication and mention of the grant of the patent: **14.02.2018**
(21) Application number: 04721467.1
(22) Date of filing: 18.03.2004
(51) Int. Cl.: A21B 3/15

(54) **FLEXIBLE ROASTING SUPPORT WITH PERFORATIONS**
FLEXIBLE RÖSTUNTERLAGE MIT PERFORATIONEN
SUPPORT SOUPLE POUR ROTIR COMPORTANT DES PERFORATIONS

(30) Priority: 20.03.2003 DK 200300094 U; 09.01.2004 DK 200400023
(43) Date of publication of application: 28.12.2005
(73) Proprietor: Poulsen, Jens Marius, 355 97 Växjö (SE); Pihl, Bo, 6893 Hemmet (DK)
(72) Inventor: Poulsen, Jens Marius, 355 97 Växjö (SE); Pihl, Bo, 6893 Hemmet (DK)
(74) Representative: Nielsen, Leif
(86) International application number: PCT/DK2004/000178
(87) International publication number: WO 2004/082386

(56) References cited:
- EP-A- 0 856 256
- GB-A- 2 220 346
- US-A- 4 763 639
- US-A- 5 586 491
- US-B1- 6 184 510

## Description

### FIELD OF THE INVENTION

The present invention relates to a flexible roasting support with perforations, for example a flexible paper or polymer foil.

### BACKGROUND OF THE INVENTION

When roasting potatoes, for example French fries, in an oven, the fries may only get crispy on the upper side and stay soft on the lower side, because of moisture and fat that stays on the pan underneath. In order to get the fries crispy on all sides, the fries have to be turned. However, the latter procedure is tedious and implies a danger of injury for the person handling the fries, because the oven, the pan and the fries are very hot.

.In order to improve baking or roasting results, a number baking containers have been disclosed concerning the problem of leading melting fat away from the supported food product. Such disclosures are found in Japan patent application JP10295550 by Isogay Atsutoshi, UK patent applications GB 2 295 308 by John Francis Gordon and GB 2 364 772 by William and Mark Rowley and US4879128. However, even though the fat may be led away, the fries are subject to an uneven roasting result. There is therefore a need for improvement such that the roasting result is more satisfactory.

### DESCRIPTION / SUMMARY OF THE INVENTION

It is therefore the object of the invention to provide means for improved roasting of food product, especially potato fries.

This object is achieved by a flexible roasting support as defined in claim 6 and a use of a flexible roasting support as defined in claim 1. As thorough study of the problem has revealed, use of a sheet according to the invention improves the result for roasting of potato fries and other food product dramatically over known methods. The perforation allows the hot air in the fan oven to circulate through the perforations such that the food product not only is roasted by the air above the food product but also by the air beneath it.

It has to be understood that the invention is not limited to be placed on a grid, as other means may be used which allows air to flow through the material.

In principle, an improved result as compared to prior art could be achieved by placing the fries directly on the grid in the fan oven. However, fries and other related food product would fall through the openings in the grid, which does not lead to a desired result. By having a sheet with openings substantially smaller than the pieces of food product to be roasted, this is prevented. Also, the perforation of the sheet according to the invention may be adjusted to special uses, for example for roasting potato fries, roasting small pieces of vegetables, etc. Another reason for not placing the food product directly on the grid is the danger of the food product sticking onto the grid. This is especially the case for potato chips or fries getting soft during the first part of the roasting process.

Another advantage of the circulation through the perforations is a reduced time for roasting or baking, which in turn results in lower energy consumption.

A sheet according to the invention may be supplied in the same way as heat resistant paper or polymer foils that already today are used for baking and roasting. However, the difference is the holes in the sheet, which allow hot air to circulate through and improve the result by the baking or roasting process. In contrast to material that is used for microwave ovens, where a susceptor is built into the material, the sheet material according to the invention may be a low-cost susceptor-free material, for example paper.

In order to remove potato chips or other food product from the sheet, the sheet may be gripped at the corners and lifted from the grid by which the sheet deforms into a bag for easy transport of the chips or other food product. As the sheet is very thin, the heat capacity is low preventing burning of fingers when gripping the sheet.

The sheet material according to the invention may be improved with a surface being a non-sticking layer, which facilitates the removal of the food product from the sheet. For example, this may be achieved with a heat resistant paper foil with a silicone top layer.

As it is known from paper used for baking, the sheet according to the invention may be dispensed from a roll of such sheet material or it may be delivered in ready-to-use pre-cut sheets, for example having a size adapted to a specific size of the fan-oven. The size of such ovens may vary from large ovens for professional use to small table-top mini ovens. Also, the sheet according to the invention may be made of single-use, disposable foil, for example of paper or polymer or a combination thereof. Alternatively, the sheet according to the invention may comprise or consist of a metal foil, for example aluminium. According to the invention, the sheet of the flexible roasting support comprises a fat absorbing layer in order to absorb the fat that may melt from the supported food product. In addition this layer may absorb dispensed liquid from the food product. This way, it is assured that the food product is not lying in the fat and/or liquid, which reduces the amount of fat with the food product and also may improve the roasting result. The sheet comprises a smooth upper layer and a fat absorbing lower layer for absorption of fat flowing from the smooth layer through the perforations. Alternatively, the fat absorbing layer may be coated with a smooth layer for easy removal of the roasted or baked food product, for example where the smooth layer allows fat to migrate through the layer, such as a paper sheet with a silicone layer, wherein the silicone layer is fat migrative.
Though the invention is intended for use on a grid or other means with openings in an oven, it may be used also on a solid plate in an oven. In this case, the benefit of the air flow through the sheet is not available, but for the fat absorbing properties, a sheet with perforations may still improve the roasting result because the contact of the food with the fat is reduced.

Alternatively to a single-use disposable sheet, the sheet may be made of a single layer of re-use polymer foil, for example comprising tetrafluorethylene, also known as Teflon®. Such re-use material may be washable material. A single layer sheet is however not encompassed by the claims. The sheet according to the invention should be heat resistant up to the temperature at which it is desired to be used. For example, the sheet could be constructed to withstand a temperature of 200°C, or rather 220°C, or higher.

The perforations of the sheet may be evenly distributed over the sheet. The advantage is a ratio between open area and closed area independent of the location on the sheet. Thus, if the size of a sheet is adjusted, for example by cutting, to the size of a fan oven, for example a small table-top model, there is still a possibility of an even circulation through the sheet.

However, in cases, where it is evident that the air circulation in the central part of the oven is higher than at the borders or vice versa, the sheet may have varying density of perforations or different sizes of the opening in order to ensure an even air circulation through the sheet. Thus, the flexible roasting support according to the invention may comprise perforations have a varying density over the sheet adapted for the specific air flow in the fan oven for ensuring even air circulation through the sheet when used in a fan oven. If regarded as advantageous, the distribution of perforations may be asymmetrically over the sheet.

Experiments have shown that good results for baking/roasting can be achieved with an area of the perforations of 10-50% or rather 25-40% as compared to the total area of the sheet.

### SHORT DESCRIPTION OF THE DRAWINGS

The invention will be explained in more detail with reference to the drawing, where
- FIG. 1: shows a prior art system with a fan oven and a plate with food product,
- FIG. 2: shows a fan oven with a sheet according to the invention on a grid,
- FIG. 3: shows a possible embodiment with a sheet roll,
- FIG. 4: shows a possible embodiment of the invention with a fat absorber.

### DETAILED DESCRIPTION / PREFERRED EMBODIMENT

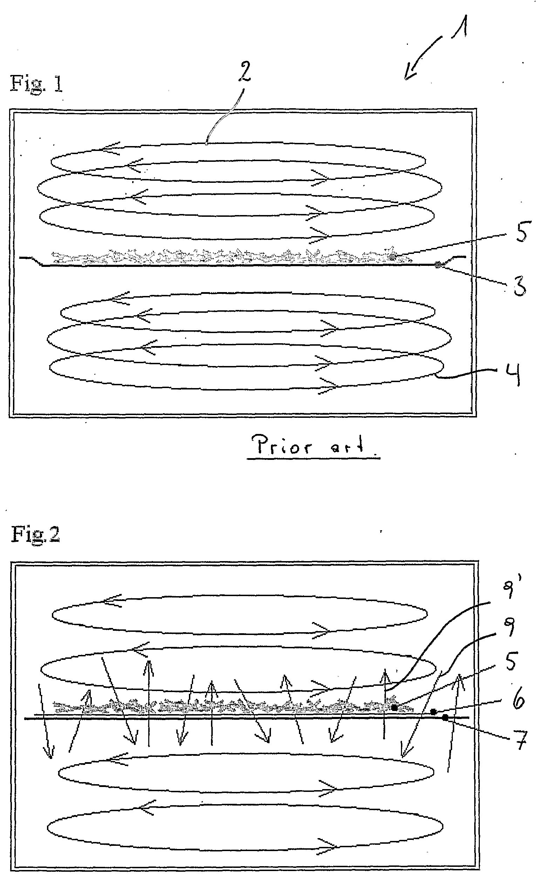

FIG. 1 shows a prior art system with a fan oven 1 inside which air circulates above 2 the plate 3 and below 4 the plate 3. The air stream 4 below the plate 3 with the food product 5, for example potato chips, heats the plate 3, which disadvantageously may result in the food product being heated more by the plate 3 than by the air stream 2 circulating above the plate 3. The result may be burned food product, for example chips. In case that fat or liquid leaves the food product 5, the food product may be prevented from being crisp on one side. Both situations are normally wanted to be omitted.

In contrast thereto, in FIG. 2, the flexible roasting support according to the invention in the form of a sheet 6 placed on a grid 7 allows air circulation 8 through the perforation, which is illustrated by arrows 9, 9' with all the advantages that have been described above.

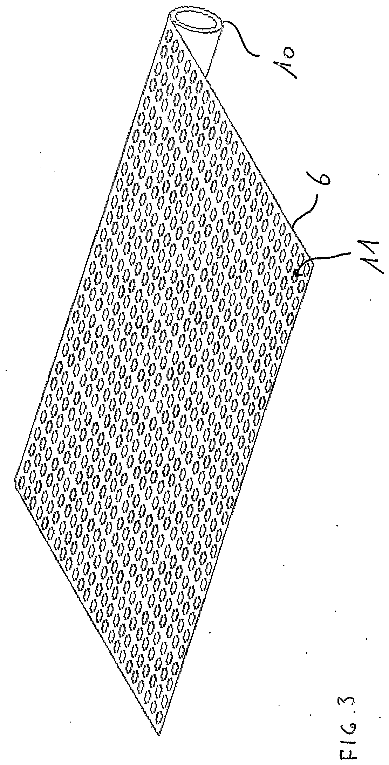

FIG. 3 illustrates a possible embodiment, where a sheet/foil 6 according to the invention is provided as part of a roll 10. Thus, sheets 6 for baking or roasting may be dispensed from the roll 10, for example for single use and following disposal. As illustrated, perforations 11 may be evenly distributed over the sheet 6.

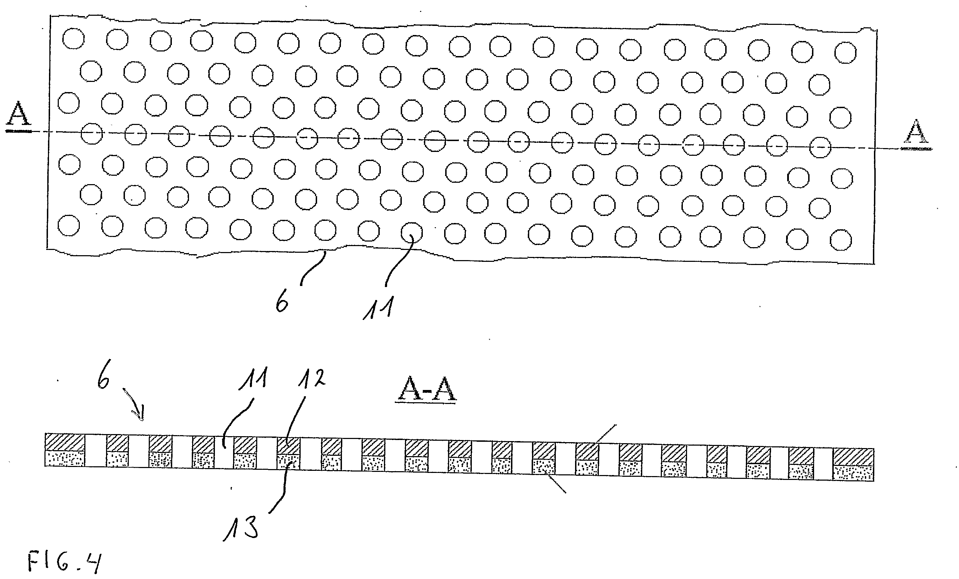

FIG. 4 illustrated a part of a sheet 6 according to the invention with circular holes as perforations 11. However, holes may have a different shape, if desired. As a cross section A-A reveals, the sheet 6 may be a sheet with more than one layer. For example, the upper layer 12 may be a non-stick layer for assuring that food product is easily removed from it. The lower layer 13 is a fat absorbing layer for absorbing fat that flows through the holes 11.

Other combinations of layers are possible, for example paper sheets with fat absorbing properties on which a fat migrative layer is provided. Such two layer system or even other multilayer systems may be provided by a variety of production methods, for example as a laminate or as foils onto which other layers are provided by painting, spraying, melting.

## Claims

1. Use of a flexible roasting support for roasting food products on a grid (7) in a fan oven (1), the support comprising a flexible sheet (6) with perforations (11) distributed over the sheet (6) for circulation (8) of heating air through the perforations (11), wherein the sheet (6), when in use, comprises a smooth upper (12) layer directed upwards for supporting a food product and a fat absorbing lower layer (13) directed downwards for absorption of fat flowing from the food product through the perforations (11) of the smooth layer (12).

2. Use according to claim 1 with the sheet (6) having a size adapted to the specific size of the fan oven (1).

3. Use according to claim 1 or 2, wherein the sheet has a surface being a non-sticking layer (12) for facilitating the removal of the food product from the sheet (6).

4. Use according to claim 3, wherein the sheet (6) is a paper foil with a silicone top layer.

5. Use according to claim 4, wherein the silicone layer is fat migrative.

6. A flexible roasting support for the use according to anyone of the claims 1-5, the support being formed as an unfolded flexible sheet (6) with perforations (11) distributed over the sheet (6) for circulation (8) of heating air through the perforations (11) during roasting of a product in a fan oven (1), wherein the sheet (6) comprises a smooth layer (12) on one side for supporting a food product and a fat absorbing layer (13) on the opposite side for absorption of fat flowing from the food product through the perforations (11) of the smooth layer (12).

7. A flexible roasting support according to claim 6, wherein the perforations (11) are evenly distributed over the sheet (6).

8. A flexible roasting support according to claim 6, wherein the perforations (11) have a varying density over the sheet (6) adapted for the specific air flow in the fan oven (1) for ensuring even air circulation (8) through the sheet (6) when used in the oven (1).

9. A flexible roasting support according to claim 6, wherein the density of perforations (11) or the size of the perforations (11) varies from the centre of the sheet (6) to the edge of the sheet (6) adapted for the specific air flow in the fan (1) oven for ensuring even air circulation (8) through the sheet (6) when used in the oven.

10. A flexible roasting support according to any one of the claims 6-9, wherein the sheet has a surface being a non-sticking layer for facilitating the removal of the food product from the sheet.

11. A flexible roasting support according to claim 10, wherein the sheet (6) is a paper foil with a silicone top layer.

12. A flexible roasting support according to claim 11, wherein the silicone layer is fat migrative.

13. A flexible roasting support according to any one of the claims 6-12, wherein the sheet has an area of perforation between 10 and 50 %.

14. A flexible roasting support according to any one of the claims 6-13 as part of a roll (10).

## Patentansprüche

1. Verwendung einer flexiblen Röstunterlage zum Rösten von Nahrungsmitteln auf einem Rost (7) in einem Umluftofen (1), wobei die Unterlage ein flexibles Blatt (6) mit über dem Blatt verteilten Perforationen (11) zum Zirkulieren (8) von Heizluft durch die Perforationen (11) aufweist, wobei das Blatt (6) im Gebrauch eine glatte nach oben gerichtet obere (12) Schicht zum Tragen eines Nahrungsmittelprodukts und eine nach unten gerichtete fettabsorbierende untere Schicht (13) zur Absorption von Fett, das aus dem Nahrungsmittelprodukt durch die Perforationen (11) der glatten Schicht (12) fließt, aufweist.

2. Verwendung nach Anspruch 1, wobei das Blatt (6) eine Größe aufweist, die an die spezifische Größe des Umluftofens (1) angepasst ist.

3. Verwendung nach Anspruch 1 oder 2, wobei das Blatt eine Oberfläche aufweist, die eine nichthaftende Schicht (12) ist, um das Entfernen des Lebensmittelprodukts von dem Blatt (6) zu erleichtern.

4. Verwendung nach Anspruch 3, wobei das Blatt (6) eine Papierfolie mit einer Silikondeckschicht ist.

5. Verwendung nach Anspruch 4, wobei die Silikonschicht fettdurchlässig ist.

6. Flexible Röstunterlage für die Verwendung nach einem der Ansprüche 1 bis 5, wobei die Unterlage als ein entfaltetes flexibles Blatt (6) mit über dem Blatt verteilten Perforationen (11) zum Zirkulieren (8) von Heizluft durch die Perforationen (11) während des Röstens eines Produkts in einem Umluftofen (1) ausgebildet ist, wobei das Blatt (6) auf einer Seite eine glatte Schicht (12) zum Tragen eines Nahrungsmittelprodukts und auf der entgegengesetzten Seite eine fettabsorbierenden Schicht (13) zur Absorption von Fett, das aus dem Nahrungsmittelprodukt durch die Perforationen (11) der glatten Schicht (12) fließt, aufweist.

7. Flexible Röstunterlage nach Anspruch 6, wobei die Perforationen (11) gleichmäßig über das Blatt (6) verteilt sind.

8. Flexibles Röstunterlage nach Anspruch 6, wobei die Perforationen (11) eine variierende Dichte über das Blatt (6) aufweisen, die dem spezifischen Luftstrom im Umluftofen (1) angepasst ist zur Gewährleistung einer gleichmäßigen Luftzirkulation (8) durch den Blatt (6) bei Verwendung im Ofen (1).

9. Flexible Röstunterlage nach Anspruch 6, wobei die Dichte der Perforationen (11) oder die Größe der Perforationen (11) von der Mitte des Blattes (6) zur Kante des Blattes (6) variiert und dem spezifischen Luftstrom im Umluftofen (1) angepasst ist zur Gewährleistung einer gleichmäßigen Luftzirkulation (8) durch das Blatt (6) bei Verwendung im Ofen (1).

10. Flexible Röstunterlage nach einem der Ansprüche 6 bis 9, wobei das Blatt eine Oberfläche aufweist, die eine nichthaftende Schicht ist, um das Entfernen des Lebensmittelprodukts von dem Blatt zu erleichtern.

11. Flexible Röstunterlage nach Anspruch 10, wobei das Blatt (6) eine Papierfolie mit einer Silikondeckschicht ist.

12. Flexibler Röstunterlage nach Anspruch 11, wobei die Silikonschicht fettdurchlässig ist.

13. Flexible Röstunterlage nach einem der Ansprüche 6 bis 12, wobei das Blatt eine Perforationsfläche zwischen 10 und 50% aufweist.

14. Flexible Röstunterlage nach einem der Ansprüche 6 bis 13 als Teil einer Rolle.

## Revendications

1. L'utilisation d'un support de rôtissage souple pour rôtir des produits alimentaires sur une grille (7) dans un four à chaleur tournante (1), le support comprenant une feuille souple (6) munie de perforations (11) réparties sur la feuille (6) pour la circulation (8) de l'air de chauffage à travers les perforations (11), dans lequel la feuille (6), lors de l'utilisation, comprend une couche supérieure (12) lisse dirigée vers le haut pour supporter un produit alimentaire et une couche inférieure d'absorption de graisse (13) dirigée vers le bas pour l'absorption de graisse s'écoulant à partir du produit alimentaire à travers les perforations (11) de la couche lisse (12).

2. Utilisation selon la revendication 1, la feuille (6) ayant une dimension adaptée à la taille spécifique du four à chaleur tournante (1).

3. L'utilisation selon la revendication 1 ou 2, la feuille ayant une surface qui est une couche non collante (12) pour faciliter l'enlèvement du produit alimentaire de la feuille (6).

4. Utilisation selon la revendication 3, la feuille (6) étant une feuille de papier avec une couche supérieure en silicone.

5. Utilisation selon la revendication 4, la couche de silicone étant perméable à la graisse.

6. Un support de rôtissage flexible pour l'utilisation selon l'une quelconque des revendications 1 à 5, le support étant formé sous la forme d'une feuille souple dépliée (6) dotée de perforations (11) réparties sur la feuille (6) pour la circulation (8) de l'air de chauffage à travers les perforations (11) pendant le grillage d'un produit dans un four à chaleur tournante (1), la feuille (6) comprenant une couche lisse (12) sur un côté pour supporter un produit alimentaire et une couche d'absorption de graisse (13) sur le côté opposé pour l'absorption de graisse s'écoulant du produit alimentaire à travers les perforations (11) de la couche lisse (12).

7. Support de rôtissage flexible selon la revendication 6, dans lequel les perforations (11) sont réparties régulièrement sur la feuille (6).

8. Support de rôtissage flexible selon la revendication 6, dans lequel les perforations (11) ont une densité variable sur la feuille (6) conçue pour l'écoulement d'air spécifique dans le four à chaleur tournante (1) pour assurer une circulation d'air uniforme (8) à travers la feuille (6) lorsqu'elle est utilisée dans le four (1).

9. Support de rôtissage flexible selon la revendication 6, dans lequel la densité de perforations (11) ou la taille des perforations (11) varie à partir du centre de la feuille (6) jusqu'au bord de la feuille (6) conçue pour le flux d'air spécifique dans le four à chaleur tournante (1) pour assurer une circulation d'air uniforme (8) à travers la feuille (6) lorsqu'elle est utilisée dans le four.

10. Support de rôtissage flexible selon l'une quelconque des revendications 6 à 9, dans lequel la feuille a une surface qui est une couche non collante pour faciliter l'enlèvement du produit alimentaire de la feuille.

11. Support de rôtissage flexible selon la revendication 10, dans lequel la feuille (6) est une feuille de papier avec une couche supérieure en silicone.

12. Support de rôtissage flexible selon la revendication 11, dans lequel la couche de silicone est perméable à la graisse.

13. Support de rôtissage flexible selon l'une quelconque des revendications 6 à 12, dans lequel la feuille présente une zone de perforation comprise entre 10 et 50%.

14. Support de rôtissage flexible selon l'une quelconque des revendications 6 à 13, faisant partie d'un rouleau (10).
